(19) Europäisches Patentamt
European Patent Office
Office européen des brevets

(11) Veröffentlichungsnummer : **0 164 639 B1**

(12) # EUROPÄISCHE PATENTSCHRIFT

(45) Veröffentlichungstag der Patentschrift : 03.01.90

(51) Int. Cl.$^5$ : **C 08 G 75/02**

(21) Anmeldenummer : 85106548.2

(22) Anmeldetag : 29.05.85

(54) **Verfahren zur Herstellung von Polyarylensulfiden mit funktionellen Endgruppen.**

(30) Priorität : 09.06.84 DE 3421610

(43) Veröffentlichungstag der Anmeldung : 18.12.85 Patentblatt 85/51

(45) Bekanntmachung des Hinweises auf die Patenterteilung : 03.01.90 Patentblatt 90/01

(84) Benannte Vertragsstaaten : DE FR GB IT

(56) Entgegenhaltungen :
EP-A- 0 053 344
EP-A- 0 075 769
EP-A- 0 079 144
EP-A- 0 125 600
FR-A- 2 470 780

(73) Patentinhaber : BAYER AG
D-5090 Leverkusen 1 Bayerwerk (DE)

(72) Erfinder : Heitz, Walter, Prof. Dr.
Am Schmidtborn 5
D-3575 Kirchhain (DE)
Erfinder : Koch, Wolfgang, Dr.
Oranienstrasse 13
D-6349 Mittenaar 3 (DE)

EP 0 164 639 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polyarylensulfiden mit funktionellen Endgruppen.

Polyarylensulfide und ihre Herstellung sind z. B. aus den US-PS 25 13 188, DE-AS 24 53 485, bekannt. Weiterhin ist bekannt, bei der Herstellung von Polyarylensulfiden das Verfahren so durchzuführen, daß die hergestellten Polymeren noch zur weiteren Umsetzung befähigte Gruppen enthalten (z. B. FR-PS 2 470 780).

Es wurde gefunden, daß Polyarylensulfide mit weiteren zur Umsetzung fähigen reaktiven Endgruppen erhalten werden, wenn man durch Zusatz von Disulfiden und gegebenenfalls Oxidationsmitteln ein disulfidhaltiges Polyarylensulfid herstellt, welches nach der Reduktion mit monofunktionellen Verbindungen umgesetzt wird.

Gegenstand der Erfindung ist daher ein Verfahren zur Herstellung von Polyarylensulfiden mit funktionellen Endgruppen aus

a) 50 bis 100 Mol-% Dihalogenaromaten der Formel

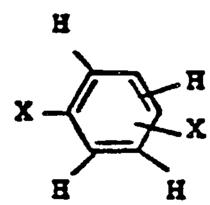

(I)

und 0 bis 50 Mol-% Dihalogenaromaten der Formel

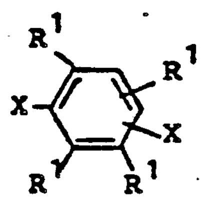

(II)

in denen

X für zueinander meta oder para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander orthoständige Reste $R^1$ zu einem aromatischen oder heterocyclischen Ring mit bis zu 10 Ringatomen, wobei bis zu 3 Ring C-Atome durch Heteroatome wie O, N, S ersetzt sein können, verknüpft sein können und immer ein Rest $R^1$ verschieden von Wasserstoff ist,

b) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von a : b im Bereich von 1 : 1 bis 1 : 3, vorzugsweise 1 : 1 bis 1 : 1,5, liegt und

c) Dihalogenierten aromatischen Disulfiden der Formel

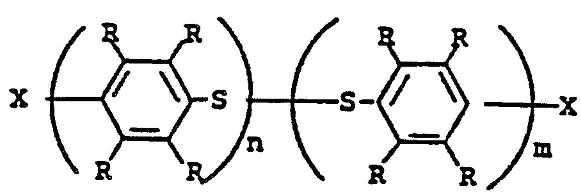

(III)

in welcher

X Halogen wie Chlor und Brom ist,

R Wasserstoff, ein $C_1$-$C_4$-Alkyl-, ein $C_5$-$C_{10}$-Cycloalkyl-, ein $C_7$-$C_{14}$-Aryl-Rest ist und die Gesamtzahl der Kohlenstoffatome in jedem Aromaten von 6 bis 30 liegt, mit der Maßgabe, daß R in mindestens 50 Mol-% des verwendeten Disulfids Wasserstoff sein muß, und

n, m ganze Zahlen von 1 bis 5, vorzugsweise 1 bis 3 sind, wobei das molare Verhältnis des Disulfids zum Dihalogenbenzol der Formel (I) und (II) im Bereich von 0,01 : 1 bis 1,0 : 1 ist, sowie gegebenenfalls Oxidationsmitteln in

d) organischen Lösungsmitteln, bevorzugt N-Alkyllactamen oder peralkylierten Harnstoffen, gegebenenfalls unter Mitverwendung von Katalysatoren und/oder Cosolventien, wobei das molare Verhältnis von Alkalisulfiden b) zu dem organischen Lösungsmittel d) im Bereich von 1 : 2 bis 1 : 20 liegt, und

e) Wasser in Form von Hydrat- oder freiem Wasser, wobei das molare Verhältnis von b : e im Bereich von 1 : 0 bis 1 : 9, vorzugsweise 1 : 3 bis 1 : 5 liegt und das Verfahren bei einer Reaktionstemperatur von 140 °C bis 280 °C, gegebenenfalls unter Überdruck durchgeführt wird, dadurch gekennzeichnet, daß man das disulfidhaltige Polyarylensulfid mit Reduktionsmitteln in Gegenwart einer unter Umsetzungsbedingungen monofunktionellen Verbindung und gegebenenfalls einer Base umsetzt, mit der Maßgabe, daß das molare Verhältnis des Reduktionsmittels, sowie der unter den Umsetzungsbedingungen monofunktionellen Verbindung zum Disulfid der Formel (III) bzw. zur Summe aus Disulfid und Oxidationsequivalenten des Oxidationsmittels im Bereich von 1 : 1 bis 2 : 1 liegt.

Beispiele für erfindungsgemäß einzusetzende Dihalogenaromaten der Formel (I) sind: m-Dichlorbenzol, p-Dichlorbenzol, p-Dibrombenzol, m-Dibrombenzol und 1-Chlor-4-brombenzol. Sie sind allein oder im Gemisch miteinander verwendbar.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-2,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Bei der Zugabe der Polyhalogenverbindungen werden gegebenenfalls 1 bis 50 Mol-%, bevorzugt 1 bis 25 Mol-% weiterer Basen, z. B. Alkalihydroxide wie NaOH oder KOH oder 0,5 bis 25 Mol-%, bevorzugt 0,5 bis 12,5 Mol-% Carbonate wie $Na_2CO_3$, bezogen auf eingesetztes Alkalisulfid, zugesetzt.

Beispiele für erfindungsgemäß einzusetzende Disulfide der Formel (III) sind: 4,4'-Dibromdiphenyldisulfid, 4,4'-Dichlordiphenyldisulfid, Bis-(4-brom-3-methylphenyl)-disulfid, Bis-(4-(4-bromphenylthio)-phenyl)-disulfid. Sie sind alleine oder im Gemisch einsetzbar.

Beispiele für erfindungsgemäß einzusetzende Oxidationsmittel sind: Elementarer Schwefel, Halogen wie Jod, Brom, Chlor, Metallsalze wie Mangan(IV)oxid, Eisen(III)chlorid, Kupfer(I ; II)chlorid.

Das disulfidhaltige Polyarylensulfid kann direkt in situ oder nach Isolierung mit dem Reduktionsmittel und der monofunktionellen verbindung umgesetzt werden.

Im letzten Fall wird die Umsetzung in einem organischen Lösungsmittel, wobei das Gewichtsverhältnis vom disulfidhaltigen Polyarylensulfid zum organischen Lösungsmittel d) im Bereich von 1 : 2 bis 1 : 20 liegt, durchgeführt.

Beispiele für erfindungsgemäß einzusetzende Reduktionsmittel sind: komplexe Hydride wie Natriumborhydrid, Lithiumaluminiumhydrid, Phosphorverbindungen wie Triphenylphosphin, Schwefelverbindungen wie Natriumsulfit, Metalle wie Zink, Magnesium, Eisen, organische Verbindungen wie Zucker. Sie sind allein oder im Gemisch miteinander einsetzbar.

Eine Zugabe von äquimolaren Mengen an Wasser und gegebenenfalls Inertgasatmosphäre (z. B. $N_2$) kann die Wirksamkeit der Reduktionsmittel günstig beeinflussen.

Der Umsetzungsmischung werden unter den Umsetzungsbedingungen monofunktionellen Verbindung der Formel (IV)

$$X-R^1-Y \qquad (IV),$$

worin

X Chlor, Brom oder eine Vinylgruppe,

Y Wasserstoff, $-O-CH=CH_2$, $-S-CH=CH_2$, $-OH$, $-OR^2$, $-SR^2$, $-NR^2$, $-NO_2$, $-CN$, $-COOR^2$, $-CHO$,

$R^1$ ein Alkyl- bzw. ein Cycloalkylrest mit 1 bis 10 Kohlenstoffatomen, ein Arylrest mit 6 bis 10 C-Atomen, ist mit der Maßgabe, daß dann zwei Substituenten Y am Arylrest stehen können,
oder ein Arylrest der Formel (V)

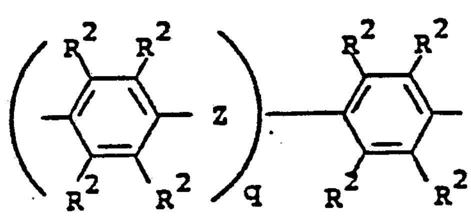

(V)

worin

Z $CH_2$, $C(CH_3)_2$, Schwefel oder Sauerstoff ist und jedes

$R^2$ Wasserstoff, ein Alkyl-, ein Cycloalkyl-, ein Arylrest oder eine Mischung derselben ist und

q für die Zahl 0 oder 1 steht,

zugesetzt.

Beispielsweise können folgende Verbindungen der Formel (IV) eingesetzt werden.

1-Bromdecan, Isopropylbromid, tert.-Butylbromid, 2-Chlorethyl-vinylether, 2-Bromethanol, 2-Brom-methyl-ethylether, Chlordimethylsulfid, 2-Bromethylamin, 2-Diethyl-amino-ethylchlorid, 2-Bromnitroethan, 2-Chloressigsäure, 4-Chlorphenyl-vinylsulfid, 4-Bromphenol, 2,6-Dimethyl-4-bromphenol, 4-Bromanisol, 4-Bromanilin, 3-Bromnitrobenzol, 4-Chlorbenzonitril, 4-Chlorbenzaldehyd, 4-Chlorbenzosäure, 4-Chlorphthalsäure, 4-Chlorphthalsäureanhydrid, 4-Chlor-o-phenylendiamin, 4-Brom-tert.-butylbenzol, 4-Chlor-4'-hydroxybenzophenon, 4-Brom-4'-hydroxybiphenyl, 4-Brom-4'-aminodiphenylsulfid, 4-Brom-4-hydroxydiphenylether, (4-Bromphenyl)-4'-hydroxyphenyl)-methan.

Die Alkalisulfide, bevorzugt Kalium- und Natriumsulfid, werden vorzugsweise in Form ihrer Hydrate oder wäßrigen Lösungen eingesetzt. Sie können auch aus Schwefelwasserstoff und den entsprechenden Alkalihydroxiden oder aus Alkalihydrogensulfiden und entsprechenden Alkalihydroxiden gemäß einer stöchiometrischen Umsetzung in der Reaktionslösung direkt hergestellt werden. Es können Mischungen der Alkalisulfide eingesetzt werden.

Je nach Anteil von Alkalihydrogensulfid in der Reaktionslösung, das als Verunreinigung im Alkalisulfid enthalten sein kann oder während der Umsetzung entstehen kann, wird zusätzlich stöchiometrisch Alkalihydroxid wie Natrium- oder Kaliumhydroxid zur Regenerierung von Alkalisulfid zudosiert. Gegebenenfalls können anstelle der Alkalihydroxide Verbindungen zugegeben werden, die unter den Reaktionsbedingungen Alkalihydroxide abspalten bzw. bilden.

Wird Schwefel als Oxidationsmittel verwendet, wird vorzugsweise Schwefel : Dihalogenbenzol im Bereich von 0,02 : 1 bis 0,3 : 1 eingesetzt.

Das Disulfid der Formel (III) sowie das Oxidationsmittel kann am Anfang der Reaktion zur Herstellung des disulfidhaltigen Polyarylensulfids der Reaktionsmischung zugegeben werden oder bis zu einem Zeitpunkt der 90 % der Gesamtdauer des 1. Reaktionsabschnittes entspricht.

Das Reduktionsmittel und die monofuktionelle Verbindung der Formel (IV) können gemeinsam am Beginn der Umsetzung des disulfidhaltigen Polyarylensulfid dem Umsetzungsgemisch zugegeben werden. Die Zugabe der Verbindung der Formel (IV) kann jedoch auch noch bis zu einem Zeitpunkt der 50 % der Gesamtdauer des 2. Reaktionsabschnittes entspricht erfolgen.

Generell kann jedes polare Lösungsmittel für die Reaktion verwendet werden, das eine ausreichende Löslichkeit der organischen und anorganischen Reaktanten unter den Reaktionsbedingungen gewährleistet. Bevorzugt werden Amide, Lactame und Harnstoffe und besonders bevorzugt N-alkylierte Amide, Lactame und cyclische Harnstoffe verwendet.

Lactame im Sinne der Erfindung sind solche von Aminosäuren mit 3 bis 5 C-Atomen, die gegebenenfalls Substituenten am Kohlenstoffgerüst tragen können, die unter Reaktionsbedingungen inert sind, z. B. Alkylreste mit 1 bis 5 C-Atomen.

N-Alkyllactame im Sinne der Erfindung sind wie die erfindungsgemäßen Lactame definiert, tragen jedoch zusätzlich am Stickstoffatom einen Alkylrest mit 1 bis 6 C-Atomen.

Harnstoffe im Sinne der Erfindung sind tetraalkylierte Harnstoffe der Formel (VI),

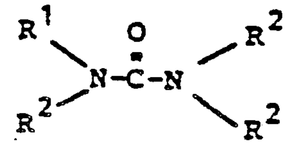

(VI)

in der $R^2$ gleich oder verschieden sein kann und einen $C_1$- bis $C_4$-Alkylrest bedeutet, sowie cyclische Harnstoffe der Formel (VII),

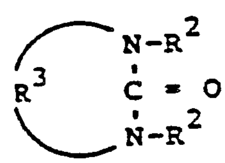

(VII)

in der

$R^2$ die obengenannte Bedeutung hat und bevorzugt für Methyl steht und

$R^3$ ein Ethylen- oder Propylenrest, der auch substituiert sein kann, ist.

Beispielsweise seien genannt :

N,N-Dimethylformamid, N,N-Diethylacetamid, N,N-Dipropylacetamid, N,N-Dimethylbenzoesäureamid, Caprolactam, N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isopropyl-2-piperidon, N-Isobutyl-2-piperidon, N-Methyl-6-methyl-2-piperidon, N-Methyl-3-ethyl-2-piperidon, N-Methyl-2-oxo-hexamethylenimin, N-Ethyl-2-oxo-hexamethylenimin, Tetramethylharnstoff, 1,3-Dimethyl-ethylenharnstoff, 1,3-Dimethyl-propylenharnstoff.

Es können Mischungen der vorstehenden Lösungsmittel gewählt werden. Die Menge an Lösungsmitteln kann in einem weiten Bereich variiert werden, liegt im 1. Reaktionsabschnitt im allgemeinen bei 2 bis 20 Mol pro Mol Alkalisulfid und im 2. Reaktionsschritt bei 2 bis 20 Mol pro 100 g des disulfidhaltigen Polyarylensulfids.

Die Umsetzungstemperaturen betragen in beiden Reaktionsabschnitten in der Regel 140 bis 280 °C, bevorzugt 180 bis 240 °C.

Die Herstellung des Polyarylensulfids mit funktionellen Endgruppen kann auch in zwei Temperaturbereichen durchgeführt werden. So ist es z. B. möglich, daß nach Zugabe des Disulfids der Formel (III) beziehungsweise des Oxidationsmittels eine Temperatur von 140 bis 260 °C und nach Zugabe des Reduktionsmittels und der monofunktionellen Verbindung der Formel (IV) ein Temperaturbereich gewählt wird, der 20 bis 50 °C über dem ersten Temperaturbereich liegt.

Der Druck bei der Umsetzung kann während beider Reaktionsabschnitte 1 bis 20 bar betragen.

Die Reaktionszeit kann in beiden Reaktionsabschnitten bis zu 10 Stunden betragen, vorzugsweise 0,2 bis 8 Stunden. Eine stufenweise Steigerung der Reaktionstemperatur während der Umsetzung kann von Vorteil sein.

Das Dihalogenbenzol und das Alkalisulfid werden etwa äquimolar umgesetzt. Das Molverhältnis Dihalogenbenzol/Alkalisulfid liegt im Bereich 1 : 1 bis 1 : 3, bevorzugt von 1 : 1 bis 1 : 1,5.

Das erfindungsgemäße Verfahren kann wie folgt durchgeführt werden :

Die Alkalisulfide werden im Lösungsmittel vorgelegt und dann kann, gegebenenfalls in einem oder mehreren Schritte, beispielsweise durch Abdestillieren des Wassers aus der Lösung, der Wassergehalt verringert werden. Eine partielle Entwässerung vor der Zugabe der Dihalogenverbindungen kann vorteilhaft sein.

Im Prinzip kann das Zusammengeben der Umsetzungskomponenten während des 1. Reaktionsabschnitts in beliebiger Weise erfolgen. Die Dihalogenaromaten der Formeln (I) und (II), das Disulfid der Formel (III) sowie gegebenenfalls das Oxidationsmittel können zusammen oder getrennt, kontinuierlich, in Portionen oder direkt auf einmal zum Alkalisulfid und dem Lösungsmittel oder einem Teil davon gegeben werden. Es können auch das Alkalisulfid zusammen mit dem Lösungsmittel oder einem Teil davon zu den Verbindungen der Formeln (I) und (II) und dem Disulfid der Formel (III) gegeben werden. Es können auch alle Reaktanten direkt zusammengegeben werden. Beliebige andere Kombinationen der Zugabe der Reaktanten sind ebenfalls möglich.

Die Zugabe des Reduktionsmittels und der unter den Umsetzungsbedingungen monofunktionellen Verbindung der Formel (IV) kann ebenfalls gemeinsam oder getrennt, in beliebiger Reihenfolge, auf einmal, portionsweise oder kontinuierlich, gegebenenfalls gelöst in dem für die Umsetzung verwendeten Lösungsmittel, erfolgen.

Erfolgt nach dem 1. Reaktionsabschnitt eine Abtrennung der disulfidhaltigen Polyarylensulfide, so wird analog verfahren, mit der Maßgabe, daß dem Umsetzungsgemisch zusätzlich ein organisches Lösungsmittel hinzugefügt wird.

Die Abtrennung des disulfidhaltigen Polyarylensulfids sowie des Polyarylensulfids mit reaktiven Endgruppen erfolgt auf übliche Art.

Das Polyarylensulfid kann direkt aus der Reaktionslösung oder erst nach Zugabe, z. B. von Wasser und/oder verdünnten Säuren, nach üblicher Verfahrensweise durch Filtration oder durch Zentrifugieren abgetrennt werden. Anschließend werden die abgetrennten Polyarylensulfide gewaschen, z. B. mit Wasser.

Eine Wäsche oder Extraktion mit anderen Waschflüssigkeiten, die auch zusätzlich oder nachträglich zu dieser Wäsche durchgeführt werden kann, ist auch möglich.

Weiterhin kann das Polymere durch Abziehen des Lösungsmittels aus dem Reaktionsraum und eine anschließende Wäsche, wie oben beschrieben, gewonnen werden.

Die erfindungsgemäßen Polyarylensulfide können über ihre reaktiven Endgruppen weiter umgesetzt werden zu linearen oder vernetzten Polymeren und können z. B. zum Aufbau von anderen Kunststoffen mitverwendet werden.

## Beispiel 1

Herstellung von Poly(thio-1,4-phenylen) mit Carbonsäure-Endgruppen

In einem mit Rührer, Manometer und Zudosiereinrichtung ausgestatteten 50 ml Glasautoklaven wurden 3,63 g (27,5 mmol) Natriumsulfid-trihydrat, 3,23 g (22 mmol) p-Dichlorbenzol, 1,579 g (5,5 mmol) 4,4'-Dichlordiphenyldisulfid und 30 ml N-Methyl-2-pyrrolidon zusammengegeben. Das Reaktionsgemisch wurde mit Stickstoff gespült und 2 Stunden auf 240 °C erwärmt, wobei sich ein maximaler Druck von 7,2 bar einstellte. Nach dem Abkühlen des Ansatzes auf Raumtemperatur wurde durch Ausfällen in 20 %iger Schwefelsäure ein hellgelber Feststoff erhalten, der zunächst mit Wasser gewaschen und anschließend mit Methanol extrahiert wurde, um niedermolekulare Anteile zu entfernen.

Nach dem Trocknen im Vakuum (15 Torr) bei 60 °C wurden 2,84 g (75,8 %) des disulfidhaltigen Poly(thio-1,4-phenylen) erhalten.

In der oben erwähnten Apparatur wurden 0,5 g des hergestellten disulfidhaltigen Poly(thio-1,4-phenylen), 0,26 g (1,0 mmol) Triphenylphosphin, 20 mg Wasser, 0,23 g N,N-Dimethylaminopyridin als Base, 0,31 g (2 mmol) p-Chlorbenzoesäure und 20 ml N-Methyl-2-pyrrolidon zusammengegeben. Nach dem Spülen mit Stickstoff wurde das Reaktionsgemisch 2 Stunden auf 240 °C erwärmt, wobei der Druck auf 2,3 bar anstieg. Nach dem Abkühlen auf Raumtemperatur konnte durch Ausfällen in Methanol ein weißer Feststoff erhalten werden.

Trocknung im Vakuum (15 Torr) bei 60 °C ergab 0,48 g des Polymeren mit Carbonsäure-Endgruppen.

Infrarotabsorptionsbande ($cm^{-1}$) :

1.685 (C=O Streckschwingung)
1.280 — 1.295 (C—OH Streckschwingung)
Molekulargewicht ($M_n$) : 1.150

**Patentanspruch**

Verfahren zur Herstellung von Polyaxylensulfiden mit funktionellen Endgruppen aus

a) 50 bis 100 Mol-% Dihalogenaromaten der Formel

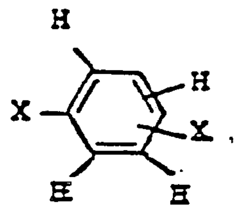

und 0 bis 50 Mol-% Dihalogenaromaten der Formel

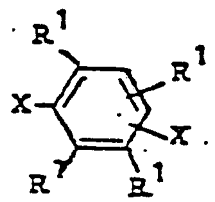

in denen

X für zueinander meta oder para-ständiges Halogen wie Chlor oder Brom steht und

$R^1$ gleich oder verschieden ist und Wasserstoff, $C_1$-$C_4$-Alkyl, $C_5$-$C_{10}$-Cycloalkyl, $C_6$-$C_{10}$-Aryl, $C_7$-$C_{14}$-Alkylaryl, $C_7$-$C_{14}$-Arylalkyl sein kann, wobei zwei zueinander orthoständige Reste $R^1$ zu einem aromatischen oder heterocyclischen Ring mit bis zu 10 Ringatomen, wobei bis zu 3 Ring C-Atome durch Heteroatome wie O, N, S ersetzt sein können, verknüpft sein können und immer ein Rest $R^1$ verschieden von Wasserstoff ist und

b) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von a : b im Bereich von 1 : 1 bis 1 : 3 liegt,

c) Dihalogenierten aromatischen Disulfiden der Formel

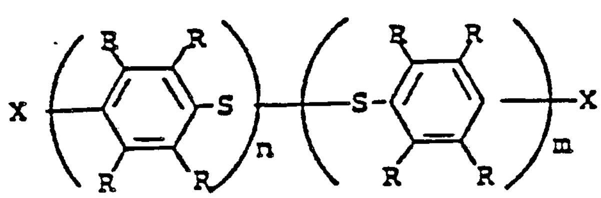

(III)

in welcher

X Halogen wie Chlor und Brom ist,

R Wasserstoff, ein $C_1$-$C_4$-Alkyl-, ein $C_5$-$C_{10}$-Cycloalkyl-, ein $C_7$-$C_{14}$-Aryl-Rest ist und die Gesamtzahl der Kohlenstoffatome in jedem Aromaten von 6 bis 30 liegt, mit der Maßgabe, daß R in mindestens 50 Mol-% des verwendeten Disulfids Wasserstoff sein muß, und

n, m ganze Zahlen von 1 bis 5 sind, wobei das molare Verhältnis des Disulfids zum Dihalogenbenzol der Formel (I) und (II) im Bereich von 0,01 : 1 bis 1,0 : 1 ist, sowie gegebenenfalls Oxidationsmitteln in

d) organischen Lösungsmitteln, bevorzugt N-Alkyllactamen oder peralkylierten Harnstoffen, gegebenenfalls unter Mitverwendung von Katalysatoren und/oder Cosolventien, wobei das molare Verhältnis von Alkalisulfiden b) zu dem organischen Lösungsmittel d) im Bereich von 1 : 2 bis 1 : 20 liegt, und

e) Wasser in Form von Hydrat- oder freiem Wasser, wobei das molare Verhältnis von b : e im Bereich von 1 : 0 bis 1 : 9 liegt und das Verfahren bei einer Reaktionstemperatur von 140 °C bis 280 °C, gegebenenfalls unter Überdruck durchgeführt wird, dadurch gekennzeichnet, daß man das disulfidhaltige Polyarylensulfid mit Reduktionsmitteln in Gegenwart einer unter Umsetzungsbedingungen monofunktionellen Verbindung der Formel (IV)

$$X—R^1—Y \quad (IV),$$

worin

X Chlor, Brom oder eine Vinylgruppe,

Y Wasserstoff, $—O—CH{=}CH_2$, $—S—CH{=}CH_2$, $—OH$, $—OR^2$, $—SR^2$, $—NR^2$, $—NO_2$, $—CN$, $—COOR^2$, $—CHO$,

$R^1$ ein Alkyl- bzw. ein Cycloalkylrest mit 1 bis 10 Kohlenstoffatomen, ein Arylrest mit 6 bis 10 C-Atomen, ist mit der Maßgabe, daß dann zwei Substituenten Y am Arylrest stehen können, oder ein Arylrest der Formel (V)

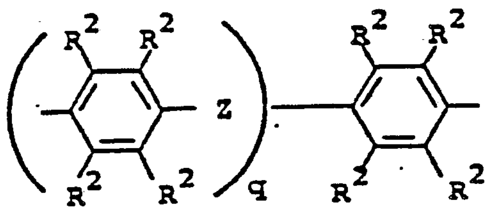

(V)

worin

Z $CH_2$, $C(CH_3)_2$, Schwefel oder Sauerstoff ist und jedes

$R^2$ Wasserstoff, ein Alkyl-, ein Cycloalkyl-, ein Arylrest oder eine Mischung derselben ist und

q für die Zahl 0 oder 1 steht,

und gegebenenfalls einer Base umsetzt, mit der Maßgabe, daß das molare Verhältnis des Reduktionsmittels, sowie der unter den Umsetzungsbedingungen monofunktionellen Verbindung zum Disulfid der Formel (III) bzw. zur Summe aus Disulfid und Oxidationsequivalenten des Oxidationsmittels im Bereich von 1 : 1 bis 2 : 1 liegt.

**Claim**

A process for the preparation of polyarylene sulphides containing functional end groups from

a) 50 to 100 mol-% of dihalogenated aromatic compounds corresponding to the following formula

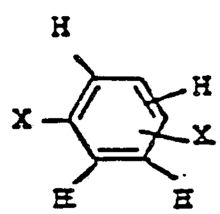

and 0 to 50 mol-% of dihalogenated aromatic compounds corresponding to the following formula

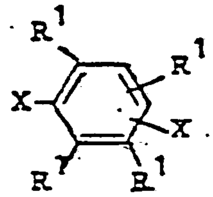

wherein the symbols

X stand for halogens such as chlorine or bromine in the meta- or para-position to one another and the symbols

$R^1$ may be identical or different and denote hydrogen, $C_1$-$C_4$-alkyl, $C_5$-$C_{10}$-cycloalkyl, $C_6$-$C_{10}$-aryl, $C_7$-$C_{14}$-alkylaryl or $C_7$-$C_{14}$-arylalkyl and two groups $R^1$ in the ortho position to one another may be joined

together to form an aromatic or heterocyclic ring containing up to 10 ring atoms and up to 3 ring carbon atoms may be replaced by hetero atoms such as O, N or S and one of the groups $R^1$ is always different from hydrogen and

b) alkali metal sulphides, preferably sodium or potassium sulphide or mixtures thereof, preferably in the form of their hydrates or aqueous mixtures, optionally together with alkali metal hydroxides such as sodium or potassium hydroxide, the molar ratio of a : b being in the range of from 1 : 1 to 1 : 3,

c) dihalogenated aromatic disulphides corresponding to the following formula

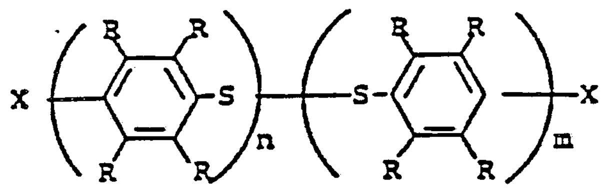

(III)

in which the symbols

X stand for halogen such as chlorine or bromine, the symbols

R stand for hydrogen or a $C_1$-$C_4$-alkyl, a $C_5$-$C_{10}$-cycloalkyl or a $C_7$-$C_{14}$-aryl group and the total number of carbon atoms in each aromatic moiety is from 6 to 30 under the condition that R is hydrogen in at least 50 mol-% of the disulphide used, and

n and m stand for integers with values from 1 to 5 and the molar ratio of the disulphide to the dihalogenated benzene of formula (I) and (II) is in the range of from 0.01 : 1 to 1.0 : 1 and optionally oxidizing agents in

d) organic solvents, preferably N-alkyl lactams or peralkylated ureas, optionally in the presence of catalysts and/or cosolvents, the molar ratio of alkali metal sulphides b) to the organic solvent d) being in the range of from 1 : 2 to 1 : 20, and

e) water in the form of water of hydration or free water, the molar ratio of b : e being in the range of from 1 : 0 to 1 : 9 and the process being carried out at a reaction temperature from 140 °C to 280 °C, optionally under excess pressure, characterised in that the poly-arylenesulphide containing disulphide is reacted with reducing agents in the presence of a compound which is monofunctional under the reaction conditions, which compound corresponds to formula (IV)

$$X—R^1—Y \qquad (IV)$$

wherein

X stands for chlorine, bromine or a vinyl group,

Y stands for hydrogen, $O—CH=CH_2$, $S—CH=CH_2$, OH, $OR^2$, $SR^2$, $NR^2$, $NO_2$, CN, $COOR^2$, CHO,

$R^1$ stands for an alkyl or cycloalkyl group containing 1 to 10 carbon atoms or an aryl group containing 6 to 10 carbon atoms under the condition that two substituents Y may then be attached to the aryl group or an aryl group corresponding to formula (V)

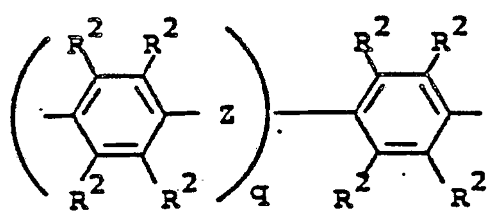

(V)

wherein

Z stands for $CH_2$, $C(CH_3)_2$, sulphur or oxygen and each

$R^2$ stands for hydrogen, an alkyl group, a cycloalkyl group, an aryl group or a mixture thereof and

q stands for the number 0 or 1

and optionally of a base, under the condition that the molar ratio of the reducing agent and of the compound which is monofunctional under the reaction conditions to the disulphide of formula (III) or to the sum of the disulphide and the oxidation equivalent of the oxidizing agent lies in the range of from 1 : 1 to 2 : 1.

**Revendication**

Procédé de production de polyarylènesulfures à groupes terminaux fonctionnels à partir de

a) 50 à 100 moles % d'hydrocarbures aromatiques dihalogénés de formule

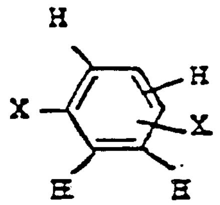

et de 0 à 50 moles % d'hydrocarbures dihalogénés de formule

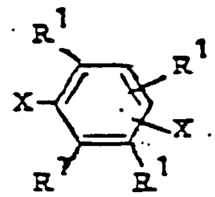

formules dans lesquelles

X désigne des halogènes en position méta ou para l'un par rapport à l'autre, tels que le chlore ou le brome et

$R^1$ représente des restes identiques ou différents qui peuvent être chacun l'hydrogène, un groupe alkyle en $C_1$ à $C_4$, cycloalkyle en $C_5$ à $C_{10}$, aryle en $C_6$ à $C_{10}$, alkylaryle en $C_7$ à $C_{14}$, arylalkyle en $C_7$ à $C_{14}$, deux restes $R^1$ en ortho l'un par rapport à l'autre pouvant être reliés en un noyau aromatique ou hétérocyclique ayant jusqu'à 10 atomes cycliques, jusqu'à 3 atomes de carbone du noyau pouvant être remplacés par des hétéroatomes tels que O, N, S, et l'un des restes $R^1$ étant toujours différent de l'hydrogène, et

b) de sulfures alcalins, de préférence le sulfure de sodium ou le sulfure de potassium ou leur mélange, avantageusement sous la forme de leurs hydrates ou de leurs mélanges aqueux, le cas échéant en association avec des hydroxydes alcalins tels que l'hydroxyde de sodium et l'hydroxyde de potassium, le rapport molaire a : b se situant dans l'intervalle de 1 : 1 à 1 : 3,

c) de disulfures aromatiques dihalogénés de formule

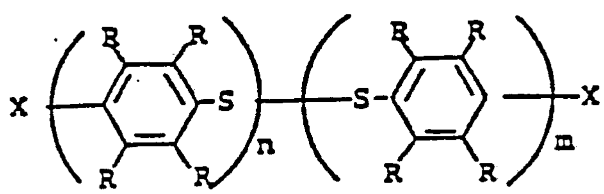 (III)

dans laquelle

X désigne un halogène tel que le chlore ou le brome,

R est l'hydrogène, un reste alkyle en $C_1$ à $C_4$, cycloalkyle en $C_5$ à $C_{10}$, aryle en $C_7$ à $C_{14}$ et le nombre total d'atomes de carbone dans chaque composé aromatique va de 6 à 30, sous réserve que R dans au moins 50 moles % du disulfure utilisé doive représenter de l'hydrogène, et

n, m sont des nombres entiers de 1 à 5, le rapport molaire du disulfure au dihalogénobenzène de formules (I) et (II) se situant dans un intervalle de 0,01 : 1 à 1, 0 : 1, ainsi que, le cas échéant, d'agents oxydants dans

d) des solvants organiques, de préférence des N-alkyl-lactames ou des urées peralkylées, en utilisant éventuellement des catalyseurs et/ou des cosolvants, le rapport molaire des sulfures alcalins b) au solvant organique d) se situant dans l'intervalle de 1 : 2 à 1 : 20, et

e) de l'eau sous forme d'eau d'hydratation ou d'eau libre, le rapport molaire b : e se situant dans l'intervalle de 1 : 0 à 1 : 9 et le procédé étant mis en œuvre à une température de réaction de 140 à 280 °C, le cas échéant en surpression, caractérisé en ce qu'on fait réagir le polyarylènesulfure porteur de deux fonctions sulfure avec des agents réducteurs en présence d'un composé monofonctionnel dans les conditions de la réaction, de formule (IV)

$$X—R^1—Y \qquad (IV),$$

dans laquelle

X désigne le chlore, le brome ou un groupe vinyle,

Y est l'hydrogène, un groupe $—O—CH{=}CH_2$, $—S—CH{=}CH_2$, $—OH$, $—OR^2$, $—SR^2$, $—NR^2$, $—NO_2$, $—CN$, $—COOR^2$, $—CHO$,

$R^1$ est un reste alkyle ou un reste cycloalkyle de 1 à 10 atomes de carbone, un reste aryle de 6 à 10 atomes de carbone, sous réserve que deux substituants Y puissent alors se trouver sur le reste aryle, ou un reste aryle de formule (V)

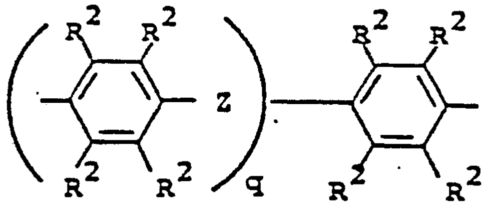

(V)

dans laquelle

Z est un groupe $CH_2$, $C(CH_3)_2$, le soufre ou l'oxygène et chaque

$R^2$ représente l'hydrogène, un reste alkyle, un reste cycloalkyle, un reste aryle ou un mélange de ces restes et

q représente le nombre 0 ou 1, et, le cas échéant, en présence d'une base, sous réserve que le rapport molaire de l'agent réducteur ainsi que du composé monofonctionnel dans les conditions de la réaction au disulfure de formule (III) ou à la somme du disulfure et de l'équivalent d'oxydation de l'agent oxydant se situe dans l'intervalle de 1 : 1 à 2 : 1.